# NEW EUROPEAN PATENT SPECIFICATION

(11) **EP 2 129 561 B2**
(45) Date of publication and mention of the opposition decision: **05.09.2018**
(45) Mention of the grant of the patent: 22.09.2010
(21) Application number: 08718861.1
(22) Date of filing: 25.03.2008
(51) Int. Cl.: B60T 8/17, B60T 8/1755, B60T 8/32

(54) **TRAILER ELECTRONIC BRAKING SYSTEM**
ELEKTRONISCHES ANHÄNGERBREMSSYSTEM
SYSTÈME DE FREINAGE ÉLECTRONIQUE DE REMORQUE

(30) Priority: 22.03.2007 GB 0705522
(43) Date of publication of application: 09.12.2009
(73) Proprietor: KNORR-BREMSE Systeme für Nutzfahrzeuge GmbH, 80809 München (DE)
(72) Inventor: FRY, Matthew Knorr-Bremse Systeme für Nutzfahrzeuge GmbH, 80809 München (DE); MEDERER, Martin Knorr-Bremse Systeme für Nutzfahrzeuge GmbH, 80809 München (DE); STRAUB, Kornel Knorr-Bremse Systeme für Nutzfahrzeuge GmbH, 80809 München (DE); MERZA, Valer Knorr-Bremse Systeme für Nutzfahrzeuge GmbH, 80809 München (DE); SZABO, Gergely Knorr-Bremse Systeme für Nutzfahrzeuge GmbH, 80809 München (DE)
(74) Representative: JENSEN & SON
(86) International application number: PCT/GB2008/001026
(87) International publication number: WO 2008/114039

(56) References cited:
- EP-A1- 1 571 058
- EP-A2- 1 902 917
- WO-A1-02/22416
- DE-A1- 10 216 564
- GB-A- 2 284 458
- US-A1- 2003 225 499
- US-A1- 2006 192 427
- US-B1- 6 225 894
- MCADAM C. ET AL: 'Rearward Amplification Suppression (RAMS)', December 2000, UNIVERSITY OF MICHIGAN
- ERVIN R. ET AL: 'Two active Systems for Enhancing Dynamic Stability in hHavy Truck Operations', July 1998, THE UNIVERSIY OF MICHIGAN

## Description

The invention relates to a trailer electronic braking system for motor vehicles having a plurality of trailers.

In Australia and North America, vehicles consisting of a tractor unit and two or more trailers are commonly utilised and these are collectively termed "road trains". Road trains are not currently permitted in Western Europe due to weight limits on the size of vehicles but due to the environmental and cost advantages of road trains, it is likely that this will change.

In all these territories there are a large number of small engineering companies building trailers for various tractors employing compressed air operable brakes. Such trailer builders tend to specialize in specific vehicle types but to meet statutory requirements, it is a common feature that trailers are provided with means which controls the braking force signaled from a towing tractor. These trailer braking systems are now invariably electronic braking systems having electronic control by an ECU. It is now routine that the electronic braking systems can incorporate features such as stability control. Stability control has proved to be a major safety enhancement.

Electronic braking systems for motor vehicle having a plurality of Trailers known in the art are disclosed in documents US 2006192427 and US 6225894. Tractors are commonly provided with electronic stability control such as ESP®, which can generate an additional brake demand on the trailer but cannot provide full stability control on the trailer, only on the tractor. Trailers are therefore provided with roll stability control (RSP). Trailer roll stability control monitors the lateral acceleration on the trailer as a build up of lateral acceleration leads to a roll over of the trailer as well as providing selective brake application and monitoring wheel speeds to detect any wheel lift which generates abnormal rotational speeds. The commonest roll over situations include where a driver steers rapidly in one direction and then back in the opposite direction, for example to avoid an obstruction on the motorway. In this situation, the ECU is able to make a predictive intervention to stabilize the vehicle by controlling the brake force at either an axle or individual wheel level. The other common roll over situation is where there is a slow build up of lateral acceleration on the trailer on, for example, a motorway exit, where a small selective brake application to the inside (with respect to the curve) wheels may result in a large change in velocity. In this case, the ECU can apply a large brake effort to the rear axles to stabilise the vehicle.

Known RSP systems suffer from the problem that they cannot simply be extended to road trains as due to the increased size of the vehicle, it may take too long for the lateral acceleration signal to be measured, processed and the brake demand adjusted before the roll over event occurs. This will be particularly the case if the centre of gravity of the vehicle is towards the rear of the train.

For the foreseeable future with road trains, there will be an additional problem of mixed trailers such as where one trailer has a modem EBS but the other trailer is older and only has ABS.

The present invention therefore seeks to provide a trailer braking system adapted to provide roll stability control for road trains, in particular having mixed trailers.

According to the invention there is provided a braking system for a motor vehicle having a plurality of trailers with the characteristics of Claim 1.

The communication means could be a pneumatic, electrical or electronic. Preferably the communication means is a CAN bus or powerline carrier. Preferably, the sensor is a lateral acceleration sensor and/or two or more wheel speed sensors. Preferably, the sensor generates a signal only when the lateral acceleration detected exceeds a predetermined threshold. Preferably the braking ECU monitors the wheel speed on the first trailer, wherein stability control is initiated as a function of whether the vehicle is braked or unbraked through a braking intervention by monitoring the rotational wheel speed behaviour.

The invention advantageously improves vehicle stability control in a road train as the risk of braking the trailer individually can lead to instability in the other trailers on the road train thereby increasing the risk of roll over. It also allows RSP emulation on a trailer than is not provided with RSP. The invention also advantageously decreases the time between lateral acceleration on the train being detected and stability control being initiated.

Exemplary embodiments of the invention will now be described in greater detail with reference to the drawings in which:
Fig. 1 shows a trailer electronic braking system
Fig. 2 shows a schematic of a road train using ISO 11992 where the first trailer has EBS
Fig. 3 shows a schematic of a road train using J2497 SAE where the first trailer has EBS
Fig. 4 shows a schematic of a road train using ISO 11992 where the second trailer has EBS
Fig. 5 shows a schematic of a road train using J2497 SAE where the second trailer has EBS

The utility vehicle trailer has a steerable front axle with front wheels 1, 2 and a rear axle with rear wheels 3, 4. Rotational wheel speed sensors 5-8 are in each case assigned to the front wheels 1, 2 and the rear wheels 3, 4, and are connected by way of electric lines 9-12 with an electropneumatic brake pressure control module 13 (EBS module) which is primarily assigned to the rear axle brakes. One brake 14-17 is in each case assigned to the front wheels 1, 2 and the rear wheels 3, 4, which brake 14-17 can be applied by means of brake cylinders 18, 19 of the front axle or springloaded brake cylinders 20, 21 of the rear axle.

The braking system of the trailer vehicle can be connected by way of three connections, specifically a pneumatic supply line connection 22, a pneumatic control line connection 23 and an electric control connection 24, with the braking system of a tractor or a further trailer.

The supply line connection 22 is connected by way of a return valve 25 and a parking valve 26 with an air brake reservoir 27. From the air brake reservoir 27, a pneumatic line 28, 31 leads to a supply input of the pressure control module 13 and ABS valve 32. In addition, a pneumatic line 29 branches off the parking valve 26 to the pressure control module 13. A pneumatic line 30 extending between the parking valve 26 and the air brake reservoir 27.

The ABS valve 32 is assigned jointly to both brake cylinders 18, 19 of the front axle and is connected with the brake cylinder 18 by way of a pneumatic line 33 and with the brake cylinder 19 by way of a pneumatic line 34. The ABS valve 32 has two electric control inputs which are connected by way of "one" electric line 35 shown here only schematically with the pressure control module 13.

Furthermore, the ABS valve 32 has a pneumatic control input 36 which is connected by way of a return valve 37 with the pneumatic control connection 23. The pneumatic control input 36 is also connected by way of a pneumatic control line 38 with a pneumatic control input of the pressure control module 13. The pressure control module 13 has an integrated pressure sensor (not shown) which measures the pressure in the pneumatic control line 38, that is, the control pressure present at the pneumatic control input 36 of the ABS valve, which control pressure is identical to the maximal pressure which can be controlled into the brake cylinders 18, 19.

The pressure control module 13 has pneumatic outputs 39 42 which are connected by way of assigned pneumatic lines with the spring brake cylinders 20 or 21. Furthermore, pneumatic axle load sensors or air bellows 43, 44 are provided at the rear axle and permit a determination of the axle load, particularly of the dynamic axle load during braking and starting. The axle load sensors 43, 44 are connected by way of electric lines with the pressure control module 13 which is shown here only as an example by means of the electric line 55. Correspondingly axle load sensors 45, 46 may be provided at the front axle. However, the axle load sensors 45,46 are not absolutely necessary.

To provide stability control a lateral acceleration sensor 50 is provided, which may also be integrated with a yaw sensor, and the output of the lateral acceleration sensor is fed to the pressure control module/ECU 13. Typically the lateral acceleration sensor 50 is integrated into the pressure control module/ECU 13. In the event that lateral acceleration on the trailer is detected, the pressure control module can provide for increased brake force at the front and/or rear axles. When the lateral acceleration sensor 50 detects lateral acceleration on the trailer in which it is installed, the sensor generates a signal setting the stability control to active.

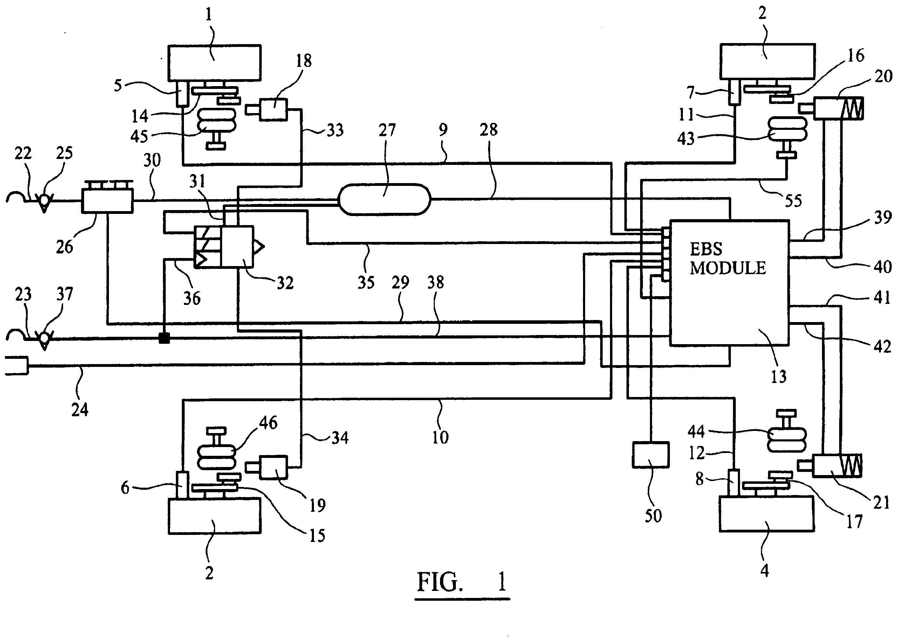

With respect to the embodiment described to Figure 1, the ABS valve 32 may be replaced with an electro-pneumatic valve where the electric control line 35 consists of a commutation means preferably CAN and an electric power source.

In a road train with mixed trailers the pressure control module 13 where one trailer has EBS and one ABS, the ABS ECU and valve on the ABS trailer will be connected to the ECU 13 and controlled by it in an analogous fashion to valve 32.

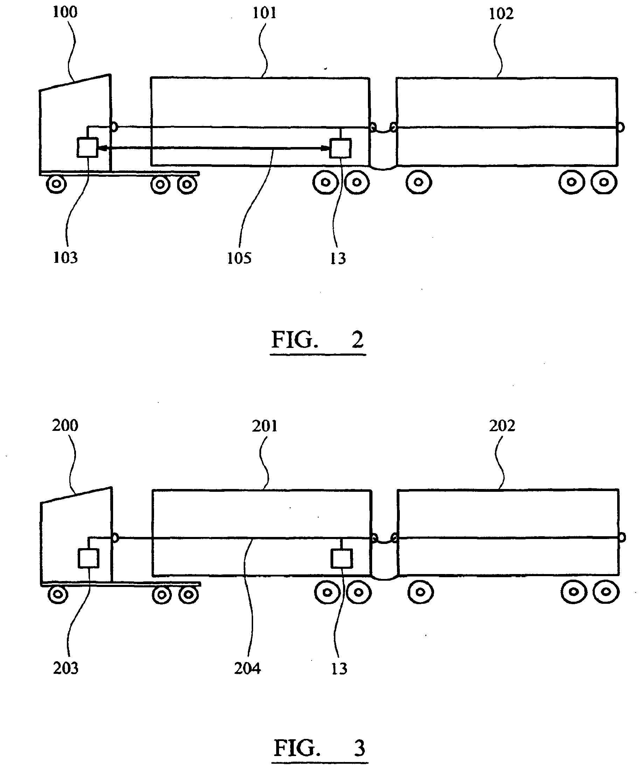

Figures 2 and 3 show schematically how the signals can be processed in a road train based on the International standard governing communications between tractors and trailers, ISO11992 and the US standard for governing communications between tractors and trailers J2497SAE.

Figure 2 shows schematically a tractor unit 100 connected to a first trailer 101, which in turn is connected to a second trailer 102. The tractor is provided with a braking ECU 103 and the first trailer 101 is provided with an electronic braking system having a pressure control module including a braking ECU 13, described in greater detail above. The second trailer 102 has a conventional ABS braking system. Pursuant to ISO 7638, a separate power line is provided along the length of the road train to provide power to the braking ECU. In the event that the lateral acceleration sensor on trailer 101 detecting lateral acceleration, a vehicle dynamic control signal setting the vehicle dynamic control (VDC) parameter to active is sent both ways on the CAN bus 105. If the lateral acceleration sensor on the trailer 101, the signal setting the VDC parameter to active is sent via the CAN bus 105 to any other trailers having an ECU and then to the tractor 100. The signal does not have to provide further information such as purpose. If the braking ECU 13 or 103 detects a VDC active parameter, stability control can be activated. The tractor 100 can therefore perform functions such as disabling cruise control and stopping the gearbox from downshifting when the brakes are applied. The active ECU 13 can enable braking functions in other trailers where an ECU is not present.

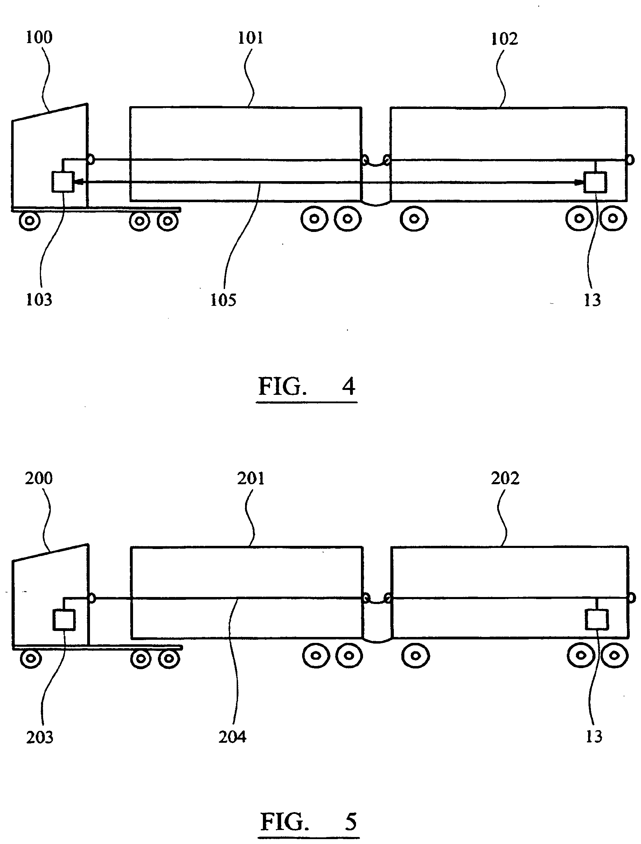

Figure 4 shows a analogous arrangement where the pressure control module ECU 13 is located on the second trailer 102 instead of the first trailer and operates in a similar way.

Figure 3 shows schematically a road train using a powerline carrier in accordance with the SAE standard J2497 comprising a tractor 200, first trailer 201 and second trailer 202. The tractor 200 and one of the trailer 201 are provided with respective braking ECU 203 and pressure control module/ECU 13 but in this case the communication between the braking ECU's is via the powerline rather than via a separate CAN bus. In this case the lateral acceleration sensors are adapted to provide a stability control actuation signal which is passed down the powerline to the adjacent trailer and to the tractor.

Figure 5 shows a similar schematic arrangement as figure 3 where the pressure control module ECU 13 is located on the second trailer 202 instead of the first trailer and operates in a similar way.

In all the embodiments described with respect to Figures 2-5, in the event that the lateral acceleration sensor 50 on the trailer in the road train detects lateral acceleration or an RSP event, then by setting the stability control actuation signal to active, roll stability control can be actuated on the trailer with the electronic braking system and the brakes applied on the trailer without electronic braking, thereby enabling said trailer to emulate the stability control of a full electronic braking system. In particular in the case where there is likely to be over steer and braking in one trailer will result in other trailers jack-knifing brake force can be applied to trailers which do not have EBS to correct this. The emulated stability control is therefore actuatable based on information from the communication interface rather than from sensors on that trailer.

The effectiveness of the roll stability control intervention can be enhanced by modifying the thresholds on the roll stability control program of the EBS trailer based on data from the non EBS trailer, where this for example transmits the wheel speed signals to the pressure control module 13. If the wheel speed are within acceptable predetermined limits on the non EBS trailer, then the brake force there could be maintained, i.e. no additional braking effort applied or alternatively a reduced braking effort. The stability of the whole road train can therefore be improved with respect to the use of roll stability on a single trailer.

In the above description of a specific embodiment of the invention, it has been assumed that there is a separate lateral acceleration sensor installed on one of the trailers. However it is also possible to detect instability when two or more wheel speed sensors are installed on the same trailer. Although the invention has been specifically described as being an electropneumatic brake system, it would be possible to use for one trailer a fully electric system.

## Claims

1. A braking system for a motor vehicle having a plurality of trailers, wherein a first trailer is provided with a braking system comprising a braking device capable of generating a braking force on an axle on the trailer, a brake force into the brake cylinders being controllable by a first braking ECU in dependence on an output of a sensor adapted to detect lateral acceleration and/or wheel speed on the first trailer and wherein a second trailer is provided with a braking system comprising a braking device capable of generating a braking force on an axle on the trailer, a brake force into the brake cylinders being controllable by an ABS valve having a second braking ECU, communication means being provided so that the ABS valve is controllable by the first braking ECU, wherein, in the event that the sensor detects lateral acceleration and/or a wheel speed indicative of loss of stability, the sensor generates a signal for actuating stability control in the first trailer and the first braking ECU generates a signal to apply the brakes on the second trailer, **characterised in that** in a case of a braked vehicle, the brake force is lowered at the braked wheel on the inside of a turn and a stability control event initiated if the rotational speed of the wheel increases by less than a predetermined amount.

2. A braking system according to Claim 1, wherein the communication means is a CAN bus or powerline carrier.

3. A braking system according to Claim 1 or Claim 2, wherein the sensor is a lateral acceleration sensor and/or a plurality of wheel speed sensors.

4. A braking system according to any one of Claims 1 to 3, wherein the sensor generates a signal only when the lateral acceleration detected exceeds a predetermined threshold.

5. A braking system according to any one of Claims 1 to 4, wherein the braking ECU monitors the wheel speed on the first trailer, wherein stability control is initiated as a function of whether the vehicle is braked or unbraked through a braking intervention by monitoring the rotational wheel speed behaviour.

## Patentansprüche

1. Ein Bremssystem für ein Kraftfahrzeug mit mehreren Anhängern, wobei ein erster Anhänger mit einem Bremssystem ausgestattet ist, das eine Bremseinrichtung umfasst, die in der Lage ist, eine Bremskraft an einer Achse des Anhängers zu erzeugen, wobei eine Bremskraft in die Bremszylinder durch eine erste Brems-ECU in Abhängigkeit von der Ausgabe eines Sensors steuerbar ist, der die Seitenbeschleunigung und/oder Raddrehzahl des ersten Anhängers erfasst, und wobei ein zweiter Anhänger mit einem Bremssystem ausgestattet ist, das eine Bremseinrichtung umfasst, die in der Lage ist, eine Bremskraft an einer Achse des Anhängers zu erzeugen, wobei eine Bremskraft in die Bremszylinder durch ein ABS-Ventil mit einer zweiten Brems-ECU steuerbar ist und wobei ein Kommunikationsmittel vorgesehen ist, so dass das ABS-Ventil durch die erste Brems-ECU steuerbar ist, wobei im Fall, dass der Sensor eine auf einen Stabilitätsverlust hinweisende Seitenbeschleunigung und/oder Raddrehzahl erfasst, der Sensor ein Signal erzeugt, das eine Stabilitätskontrolle im ersten Anhänger in Gang setzt, und die erste Brems-ECU ein Signal erzeugt, um die Bremsen am zweiten Anhänger zu betätigen, **dadurch gekennzeichnet, dass** im Falle eines gebremsten Fahrzeugs die Bremskraft an dem gebremsten Rad in der Innenseite einer Kurve gesenkt wird und dass ein Stabilitätskontrollereignis ausgelöst wird, wenn die Drehgeschwindigkeit des Rads um weniger als einen vorgegebenen Betrag zunimmt.

2. Ein Bremssystem nach Anspruch 1, wobei das Kommunikationsmittel ein CAN-Bus oder ein Powerline-Carrier ist.

3. Ein Bremssystem nach Anspruch 1 oder Anspruch 2, wobei der Sensor aus einem Seitenbeschleunigungssensor und/oder mehreren Raddrehzahlsensoren besteht.

4. Ein Bremssystem nach einem der Ansprüche 1 bis 3, wobei der Sensor nur dann ein Signal erzeugt, wenn die erfasste Seitenbeschleunigung einen vorgegebenen Grenzwert überschreitet.

5. Ein Bremssystem nach einem der Ansprüche 1 bis 4, wobei die Brems-ECU die Raddrehzahl des ersten Anhängers überwacht und wobei die Stabilitätskontrolle in Abhängigkeit davon, ob das Fahrzeug gebremst oder ungebremst ist, durch eine Bremsintervention aufgrund der Überwachung des Raddrehzahlverhaltens ausgelöst wird.

## Revendications

1. Système de freinage pour un véhicule à moteur ayant une pluralité de remorques, dans lequel une première remorque est pourvue d'un système de freinage comprenant un dispositif de freinage capable de générer une force de freinage sur un essieu sur la remorque, une force de frein dans les cylindres de frein pouvant être commandée par un premier bloc de commande électronique de freinage en fonction d'une sortie d'un capteur adapté à détecter une accélération latérale et/ou vitesse de roue sur la première remorque et dans lequel une seconde remorque est pourvue d'un système de freinage comprenant un dispositif de freinage capable de générer une force de freinage sur un essieu sur la remorque, une force de frein dans les cylindres de frein pouvant être commandée par une soupape ABS ayant un second bloc de commande électronique de freinage, des moyens de communication étant prévus de sorte que la soupape ABS peut être commandée par le premier bloc de commande électronique de freinage, dans lequel, au cas où le capteur détecte une accélération latérale et/ou une vitesse de roue indicatrice d'une perte de stabilité, le capteur génère un signal pour actionner une commande de stabilité dans la première remorque et le premier bloc de commande électronique de freinage génère un signal pour appliquer les freins sur la seconde remorque, **caractérisé en ce que** dans un cas d'un véhicule freiné, la force de frein est abaissée au niveau de la roue freinée sur l'intérieur d'un virage et un événement de commande de stabilité initié si la vitesse de rotation de la roue augmente de moins d'une quantité prédéterminée.

2. Système de freinage selon la revendication 1, dans lequel les moyens de communication sont un bus CAN ou un courant porteur.

3. Système de freinage selon la revendication 1 ou la revendication 2, dans lequel le capteur est un capteur d'accélération latérale et/ou une pluralité de capteurs de vitesse de roue.

4. Système de freinage selon l'une quelconque des revendications 1 à 3, dans lequel le capteur génère un signal uniquement lorsque l'accélération latérale détectée dépasse un seuil prédéterminé.

5. Système de freinage selon l'une quelconque des revendications 1 à 4, dans lequel le bloc de commande électronique de freinage surveille la vitesse de roue sur la première remorque, dans lequel la commande de stabilité est initiée comme fonction du fait que le véhicule soit freiné ou non freiné par une intervention de freinage en surveillant le comportement de vitesse de rotation de roue.
